# EUROPEAN PATENT APPLICATION

(11) **EP 4 768 629 A2**
(43) Date of publication of application: **01.07.2026**
(21) Application number: 25219702.5
(22) Date of filing: 01.12.2025
(51) Int. Cl.: C23G 1/00, C23G 1/12, C23G 1/22, C25D 11/08, C25D 11/16, C25D 11/24, C25D 3/12, C25D 3/22, C25D 3/46, C25D 3/62, A47J 47/02, B65D 1/00

(54) **PROCESS OF FORMING DISPOSABLE FOOD CONTAINERS MADE OF ALUMINUM WITH APPLICATION OF AN ANTI-CORROSIVE TREATMENT AND PRODUCT THUS OBTAINED**

(30) Priority: 05.12.2024 IT 202400027561
(71) Applicant: MECHANOTOOLS S.R.L., 04014 Pontinia (LT) (IT)
(72) Inventor: MAZZER, Alberto, I-04014 Pontinia (LT) (IT)
(74) Representative: Fiammenghi, Eva

(57) **Abstract**

Process of forming disposable food containers made of aluminum with application of an anticorrosive treatment, comprising the steps of:
(A) chemical degreasing with solution of low alkaline surfactant soaps;
(B) washing;
(C) pickling with solution composed of HNO₃ and H₂SO₄;
(D) satin finishing with solution composed of NaOH, adjusted with NaOH;
(E) second washing;
(F) anodic oxidation with solution composed of H₂SO₄ and additive;
(G) third washing;
(H) natural oxidation fixing with demineralized water,
(I) final washing and molding of said container.

## Description

### Field of the art

The invention is situated in the field of food containers made of aluminum and, in particular, regards a food container subjected to anodic or electroplating treatment, by means of a multistep process that confers to the container anti-corrosive properties, including the capacity to resist temperatures beyond 300°C, rendering it suitable for food applications that require the exposure to high temperatures.

### Prior art

Based on the technique diffused up to now, the food containers made of aluminum, intended for contact with foods that are quite salty or acidic, presently must undergo a painting treatment before being able to be exposed to the cooking temperatures with the limitation of the temperature level given by the type of coating employed. Presently, there are various treatment types for improving the resistance and food safety that are usually used in combination with each other:
1. anodization: this electrochemical process creates a layer of aluminum oxide on the surface, increasing the corrosion resistance and the duration of the material;
2. painting: the painting applies a layer of protective paint which can be based on polymers such as PTFE (Teflon) or other safe epoxy resins for the contact with foods. Such coatings assist in preventing chemical reactions between the aluminum and the foods, especially acidic foods.

The containers made of painted aluminum are designed for resisting high temperatures and more in detail:
1. PTFE (Teflon) is a polymer resistant up to about 260°C (500°F), rendering it suitable for cooking and other high-temperature applications,
2. FEP (Fluorinated Ethylene Propylene), similar to PTFE, is resistant up to about 205°C (400°F);
3. the epoxy paints can resist up to temperatures of about 204°C (400°F).

The durability of the containers made of painted aluminum is considerable, due to the treatments to which they are subjected and among the characteristics acquired following the treatment, the following can be listed:
- corrosion resistance: the coats improve the corrosion resistance, particularly important for foods with high ph or high salinity;
- mechanical protection so that the painting and the anodization improve the surface hardness, reducing wear and scratches during daily use;
- long duration, so that the aforesaid treatments assist in maintaining the quality of the container over time, extended the duration of preservation of the foods and preserving the freshness thereof.

They can be used not only for the cooking steps, but also for the preservation and transport of foods, maintaining the safety and the quality of the foods even at high temperatures. Among the patents of the field, NZ721898A is cited, which claims a sheet-plate coated in resin for containers which offers an optimal separation capacity and stably meets various needs. The resin coated plate for containers is provided with a resin layer on one side of the metal plate, which will be the internal surface of the container once formed. The resin layer:
- contains at least 85% in moles of terephthalic acid,
- has a thickness comprised between 5 µm and 20 µm,
- has a multilayer structure based on polyester,
- includes at least two layers and the more external resin layer, which will come into contact with the contents, contains from 0.10 to 2.0% in mass of a compound based on wax with respect to the more external layer, which contains carnauba wax.

The maximum value of the intensity ratio of the Raman band (I1720/I1615), measured for the transverse section of the more external layer, using a laser polarization plane parallel to the surface of the resin layer is comprised between 0.45 and 0.80. The more external layer also has a thickness comprised between 0.5 µm and 10 µm.

The patent ES2385156A1 instead describes a tray provided with a protective layer integrated in hard anodized Y aluminum amorphous oxide, arranged on a base body made of aluminum. The thickness of the protective layer is about 5 micrometers and can resist temperatures up to 1800 K. The protective layer has a thermal conductivity of 50 W/m. A further anti-adherent layer is applied above the protective layer and is made of PTFE. The anti-adherent layer has a thickness of 5 micrometers. The body is immersed in a 15% sulfuric acid solution contained in a recipient. The acid is cooled up to a temperature of 0 degrees Celsius.

Notwithstanding the vast array of existing solutions for improving the strength and food safety of aluminum containers, such methods have intrinsic limitations. The anodic treatment, or a deposited electro-coating, even if it increase the corrosion resistance and the material duration, has up to now never been applied to disposable food containers. While coatings such as PTFE and FEP, notwithstanding their thermal resistance, can be degraded at temperatures close to their upper limits, releasing potentially harmful substances and reducing the effectiveness of the container over time. In addition, the presence of paints and coats requires a constant monitoring of their integrity in order to prevent the direct contact of the foods with the aluminum, which can involve a risk for food safety.

The process claimed in the present invention is clearly distinguished from the above-described conventional solutions, first of all since it is applied to disposable food containers, conferring an anti-corrosion strength to the container, at high temperatures, without having to use lacquer or paint. This approach eliminates the risks associated with the degradation of the coats and the possible contamination of the foods, simultaneously ensuring an effective protection against corrosion and exposure to high temperatures.

The essential difference between the proposed process and the conventional techniques lies in the capacity of creating a protective barrier directly on the surface of the aluminum without adding external substances that could compromise the food safety. In addition, the claimed process offers an ecologically sustainable solution with respect to the current practices which is inexpensive to produce.

In addition to the technical and safety advantages, an important aspect of the innovation regards the environmental impact and waste management. The painted aluminum in fact requires a special treatment for recycling with respect to non-painted aluminum. The process of recycling aluminum with coats involves the use of dedicated furnaces, necessary for the combustion of the resins and paints, which release highly toxic substances during evaporation. Such emissions must be managed through special filters, increasing the costs and the complexity of the recycling process. These additional costs, together with the use of advanced filtering technologies, render the recycling of painted aluminum less convenient from an economic standpoint and less sustainable from an environmental standpoint. In addition, during the casting step, the resins and other substances present in the coating can contaminate the metal, causing a greater loss of raw material and reducing the overall efficiency of the recovery process. The proposed innovative process, which eliminates the need for paints and coats, completely avoids these problems, allowing a simpler and more sustainable recycling of aluminum. In this manner, not only are costs reduced, and emissions deriving from the resin combustion are reduced, but a greater quantity of raw material is also preserved during casting. Consequently, the new solution offers an ecologically sustainable response that reduces the environmental impact of the life cycle of aluminum containers, contributing to the formation of a waste management system that is more efficient and respectful of the environment.

### Description of the invention

With the present industrial invention patent application, it is intended to describe and claim a process of forming disposable food containers made of aluminum and application of an anti-corrosive treatment thereon; the present tends to also protect the product thus obtained, which through the aforesaid process, is characterized by resistance to corrosion and to high temperatures without using lacquer or paint, overcoming the limitations of the existing solutions and improving the safety, durability and sustainability of the containers made of disposable aluminum. These aspects, together with the capacity to maintain the quality and the freshness of foods in extreme condition, underline the unique nature and importance of the invention in the context of the present market.

These containers are also provided with lids made from sheets that are cut, preformed and molded, subjected to all the steps of the claimed process, intended both for large scale retailers and for collective catering, capable of remaining in prolonged contact with salty or acidic products (such as for example tomato) which solves the problem of corrosive alteration, extending the lifetime and the integrity of the container.

This translates into a plurality of advantages, including greater durability of the container, a reduction of the production costs due to the elimination of the coating materials and an increased food safety due to the absence of potentially dangerous components. The elimination of the use of synthetic coats and paints reduces the environmental impact associated with the production and disposal of aluminum containers, in line with the growing need for sustainability in the food packaging field. The process for applying an anti-corrosive treatment provides for a sequence of specific steps, each of which performing an essential role in reaching the final desired result. The first crucial step is the chemical degreasing, carried out by using a solution composed of low alkaline surfactant soaps at a concentration preferably comprised between 40 and 60 g/l. This solution is applied on the material which will serve for molding the container at a temperature preferably comprised between 50 and 70°C and for a time preferably comprised between 3 and 7 minutes. The purpose of the chemical degreasing is to remove possible residues of fat, oil or other impurities present on the surface of the container, suitably preparing it for the subsequent steps of the process. After the degreasing, the material for the container is subjected to a step of washing with running water in order to remove possible residues of the degreasing solution and prepare the surface for the subsequent step.

The following step is the pickling, carried out by immersing the container or the material in a solution composed of nitric acid (HNO₃) at a concentration preferably comprised between 200 and 300 ml/l and sulfuric acid (H₂SO₄) at a concentration preferably comprised between 80 and 120 ml/l. The purpose of the pickling is to remove the surface oxide layer present on the container, creating a uniform and reactive surface and facilitating the adhesion of the subsequent steps of the treatment.

Subsequently, the container or the material is subjected to a satin finishing step, which provides for the immersion in a solution composed of sodium hydroxide (NaOH) at a concentration preferably comprised between 30 and 50 g/l concentrated stabilizer at a concentration comprised between 20 and 40 ml/l. This solution is applied at a temperature comprised between 35 and 45°C, for a time between 2 and 6 minutes. The concentration of the solution is adjusted with NaOH at a concentration comprised between 15 and 25%. The satin finishing has the purpose of creating a uniform and opaque surface on the container, improving its aesthetic appearance and preparing it for the next step of the process. After the satin finishing, the container is subjected to a second step of washing with running water in order to remove possible residues of the satin finishing solution and prepare the surface for the following step.

The subsequent step provides for the anodic oxidation, carried out by immersing the container in a solution composed of sulfuric acid (H₂SO₄) at a concentration comprised between 170 and 210 g/l and an additive, at a concentration comprised between 8% and 12% with respect to H₂SO₄. Such solution is applied at a temperature comprised between 18 and 22°C. The anodic oxidation has the purpose of creating a protective oxide layer on the surface of the container, increasing the corrosion resistance thereof and improving the mechanical properties thereof. Following the anodic oxidation, the container is subjected to a third step of washing with running water in order to remove possible residues of the oxidation solution and prepare the surface for the subsequent step.

The following step is the natural oxidation fixing, carried out by immersing the container in demineralized water at a temperature comprised between 90 and 100°C and for a time between 2 and 4 minutes per micron of thickness of the oxide layer formed during the anodic oxidation. The fixing has the purpose of stabilizing the oxide layer, rendering it more resistant and durable over time.

Possibly, following the bath in sulfuric acid, there is an addition of plant-based pigment which in the fixing step allows personalizing the aesthetics of the container, as requested by each user. For example, allowing the pairing of a color based on the contained food product.

The following process provides for a further step of washing with running water.

The chemical degreasing step comprises at least a solution containing low alkaline surfactant soaps, preferably at a concentration of 50 g/l. The solution is applied at a temperature preferably of 60°C for a time of 5 minutes. During this step, the container is immersed in the degreasing solution, which acts on the surface of the metal in order to remove oils, fats and other impurities.

In a further and different version, the process for applying the present anti-corrosive treatment comprises at least a step (alternative to the anodic oxidation) of electroplating, which follows the satin finishing step. Such step is divided into different substeps, the first of which providing for the preparation of the electrolytic bath and the immersion of the container in the bath itself. The selection of the type of electrolytic bath depends on the type of metallic deposit desired on the surface of the container.

Alternatively, the electrolytic bath contains:
- nickel sulphate in order to obtain nickel deposits,
- zinc chloride in order to obtain zinc deposits,
- cobalt and gold potassium cyanide complex for gold and cobalt alloy deposits.

Alternatively, the conversion treatment for aluminum based on trivalent chromium is provided for.

Subsequently, a direct electric current is provided through the electrolytic bath. The application of the direct electric current is maintained up to the formation of a uniform metallic layer on the surface of the container. The metallic layer is formed gradually due to the electrodeposition process, in which the metal ions present in the electrolytic bath are deposited on the surface of the container, creating a protective layer.

During the entire electrodeposition step, two parameters are constantly monitored: the time of exposure of the container to the electrolytic bath and the applied current density. The exposure times determines the thickness of the deposited metal layer, while the current density affects the speed of deposition and the quality of the deposit itself. A careful control of these parameters ensures the uniformity and the effectiveness of the anti-corrosive coating.

Once the desired thickness of the metal layer has been reached, the material of the container is removed from the electrolytic bath. Subsequently, one proceeds with a careful rinsing of the container, so as to remove possible electrolyte residues that could have remained on the surface. This rinsing passage is crucial for ensuring the cleaning and the integrity of the just-deposited coating.

In addition, the process provides for an additional step of treatment by means of passivation, following the substep of removal and rinsing of the container from the electrolytic bath which consists of a final bath of the container in specific solutions, suitably formulated in order to improve the corrosion resistance and the surface properties of the metallic deposit.

The solutions used in the passivation step can be chemical agents that facilitate the formation of a passive layer on the surface of the metallic deposit. This passive layer acts as a protective barrier, increasing the resistance of the container to corrosive agents and improving its durability over time. In addition, the passivation can confer desired surface properties to the metallic deposit, such as greater shine, greater adhesion and greater wear resistance.

Finally, there is the molding and forming of the container made from the treated aluminum foil.

The container for food use subjected to the anti-corrosion treatment according to the process described up to now comprises at least a base body, preferably made of aluminum. Due to the properties acquired following the treatment, it is structurally resistant even if exposed to direct flame and at high temperatures up to 660.3 °C (about 933.5 K), providing a greater protection against corrosion and deterioration, even in extreme temperature conditions and exposure to the direct flame. The high thermal conductivity of aluminum allows a uniform distribution of the heat, ensuring a uniform cooking or heating of the contents.

Due to this anti-corrosion treatment, the container is capable of resisting the exposure to direct flame and at high temperatures up to 660.3 °C (about 933.5 K) without releasing toxic substances. This characteristic renders it ideal for applications in which the container could be subjected to extreme conditions, such as cooking on naked flame or exposure to intense heat sources. The capacity to resist high temperatures ensures that the container maintain its structural integrity and its function even in thermal stress situations, maintaining resistance to corrosion and to oxidation.

The container for food use in a further version provides for at least a lid, treated with the same abovementioned process, configured to be coupled with the base body to hermetically close or semi-hermetically close the disposable container.

The closure is essential for preserving the freshness, the taste and the quality of the foods preserved inside the container. It prevents the entrance of air, moisture and external contaminants, extending the duration of preservation and maintaining the integrity of the contents.

The precise coupling between the lid and the base body is made possible due to a careful design of the contact surfaces and of the size tolerances. This ensures an optimal seal and prevents undesired losses or leaks of the contents. In a further version, the lid is provided with a closure system configured to ensure a safe and hermetic closure of the container when the lid is coupled to the base body.

The closure system typically comprises coupling or blocking elements that are coupled to each other when the lid is pressed on the base body. These elements can include tabs, grooves or other fixing devices that are engaged in a secure manner, preventing the accidental opening of the container. In such a manner, an effective barrier is created against the entrance of air, moisture and external contaminants.

In addition, the closure system also offers a tactile, visual and auditory feedback to the user during the closure process. The characteristic "click" or distinctive sound produced by the snap-fit mechanism indicates that the lid has been correctly positioned and blocked on the base body. This feedback ensures that the user has the correct closure of the container, avoiding uncertainties or errors.

In summary, the combination of the anti-corrosion treatment, of the optimized shape and of the effective closure system ensures the protection of the contents, the duration over time and the practicality of use of the disposable container.

### Description of the figures

The invention will be described hereinbelow in at least a preferred embodiment as a nonlimiting example with the aid of the enclosed figures, in which:
- FIGURE 1A shows a variant of the lid 3 in which a so-called crimped closure is provided for, in which an edge of the central body is folded and hooked tightly with said lid 3, creating a resistant seal.
- FIGURE 1B shows a variant of the lid 3 in which the closure is obtained from a simple fold of said lid 3.
- FIGURE 1C shows a variant of the lid 3 in which it is heat sealed with said central body, creating a hermetic closure.
- FIGURE 1D shows a snap-fit closure in which the lid 3 is fixed to the container due to a snap-fit system, such as grooves or compatible edges.
- FIGURE 2 shows a longitudinal section view of a container for food use, disposable, with anti-corrosion treatment according to the process described in the claims. The container comprises a base body 2 made of aluminum and a lid 3 configured to be coupled with the base body 2 to hermetically close the container.

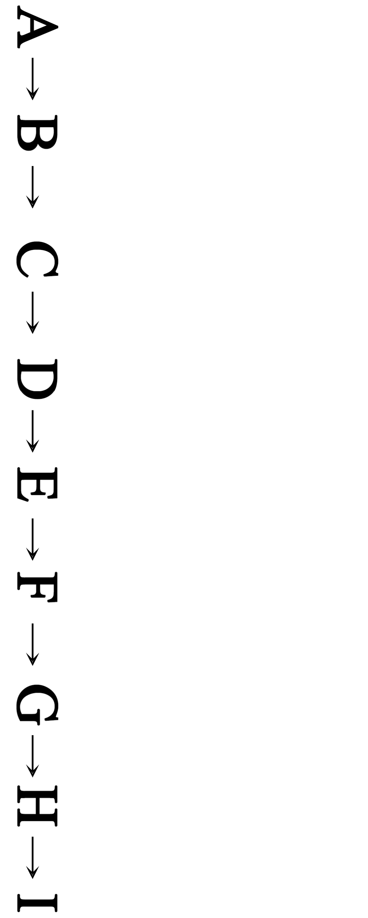

- FIGURE 3 schematically shows the various steps of the anti-corrosive treatment process applied to the container from A to I.

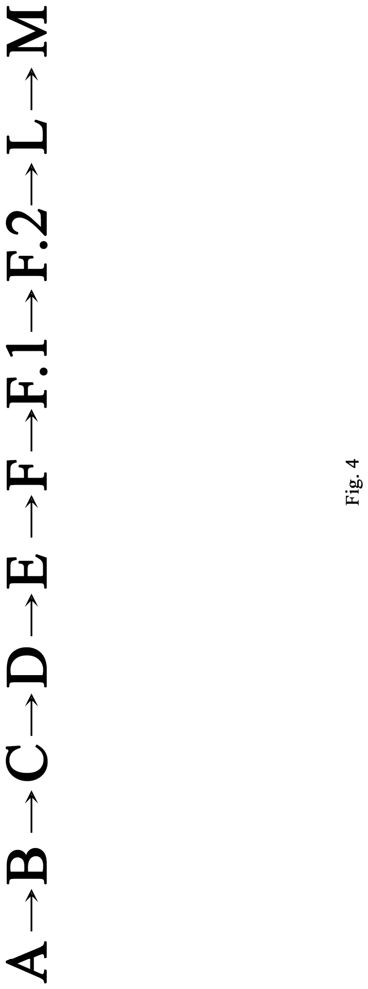

- FIGURE 4 shows a block diagram of the steps of the anti-corrosive treatment process in a version which provides for the application of electroplating comprising further steps F.1, F.2, L and M.

### Detailed description of the invention

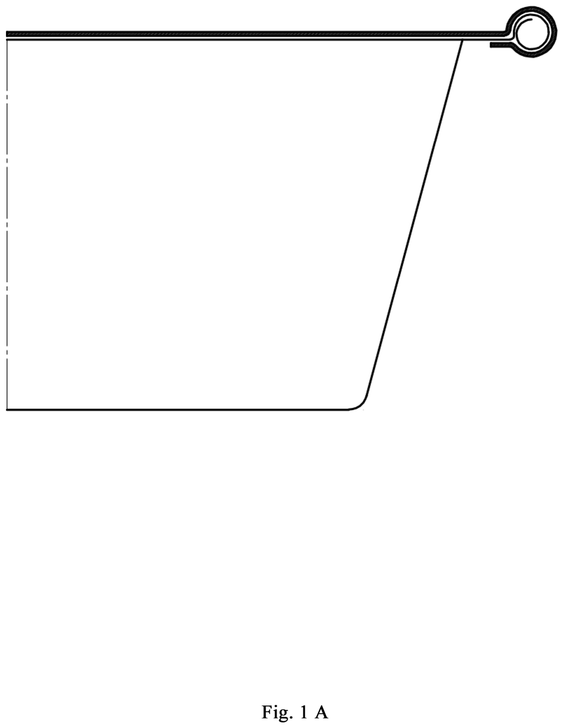

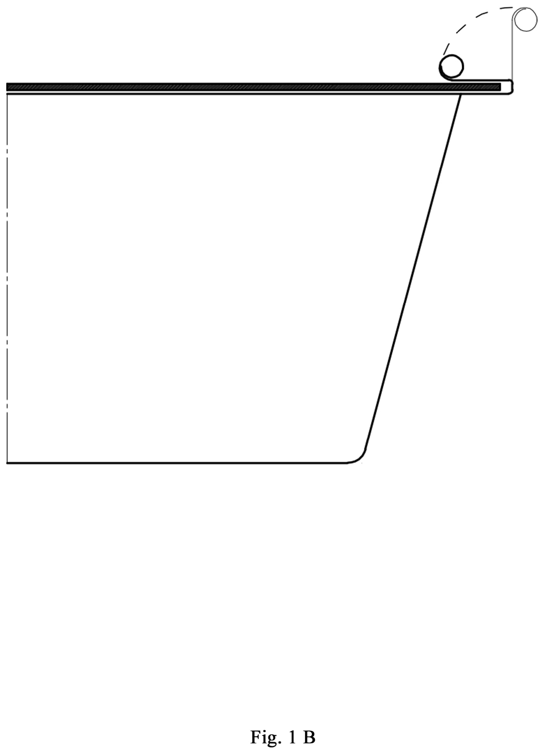

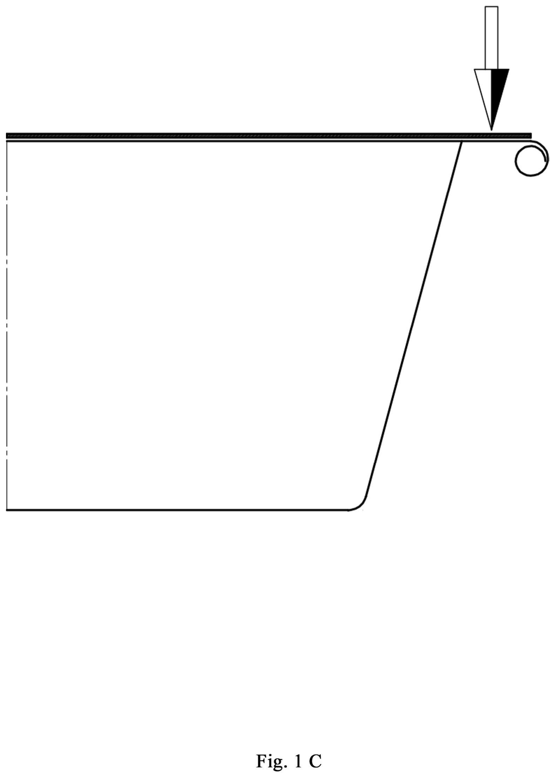

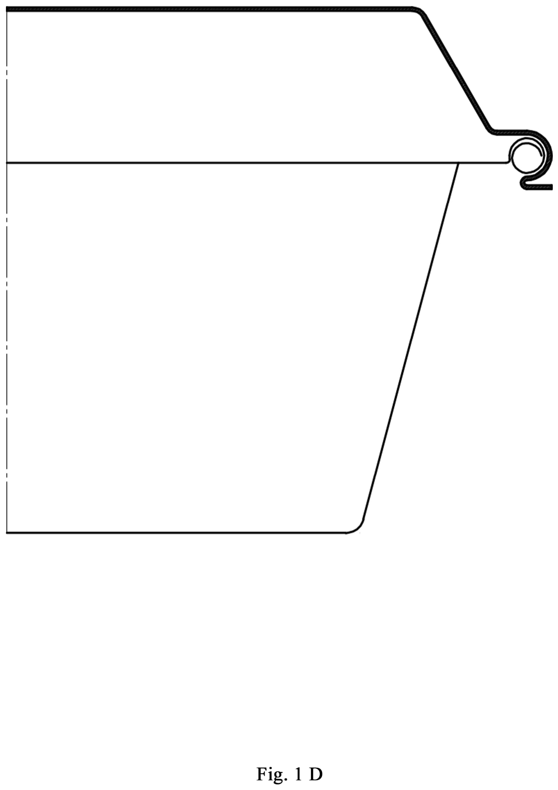

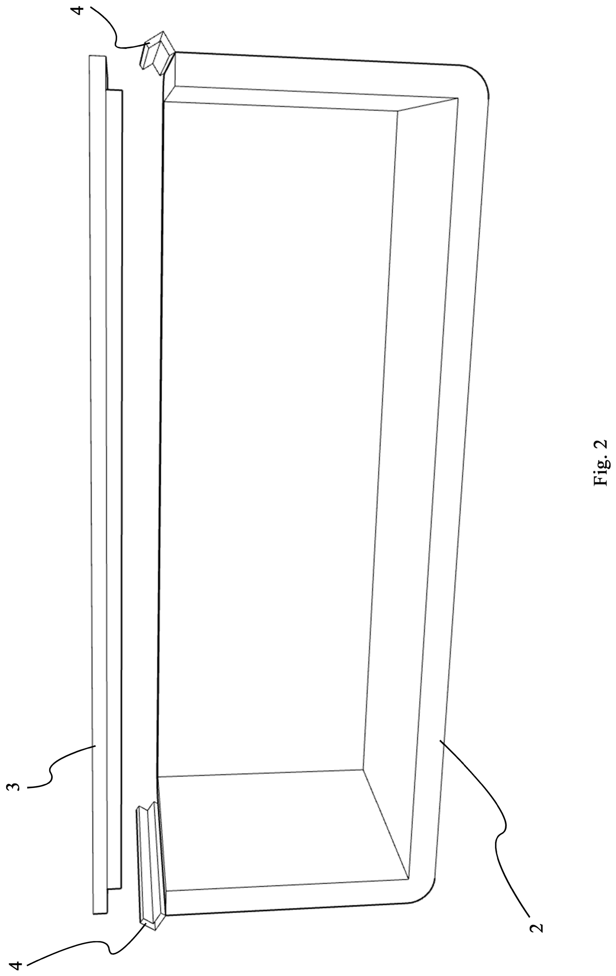

It will be immediately obvious that innumerable variations and modifications can be made to that described herein (e.g. relative to shape, size, arrangement, parts with equivalent function), without departing from the field of protection of the invention as indicated in the enclosed claims. With reference to Fig. 2, the steps are schematically illustrated of the process for forming and applying the anti-corrosive treatment on disposable food containers. Fig. 1 instead shows a longitudinal section view of a container for food use, disposable, and of the relative lid 3 obtained following the anti-corrosion treatment, object of the present description. At the center of the representation, the base body 2 of the aluminum container is positioned, material selected for its known properties of lightness, resistance/strength and compatibility with foods. The lid 3, designed for being perfectly coupled with the base body 2 and to ensure a hermetic closure, incorporates closure systems such as closure obtained from fold, crimped, with snap-fit or heat-seal system. These systems not only facilitate the opening and the closing of the container, but they ensure that, once closed, the container remains sealed in a safe manner, protecting the contents from external contaminations and preserving the freshness thereof. The anti-corrosive treatment process, as illustrated schematically in figure 2, starts with step A. of chemical degreasing, using a solution of low alkaline surfactant soaps. This solution is applied to the material from which the container will be obtained, at temperatures preferably comprised between 50 and 70°C for a period of time that varies from 3 to 7 minutes, depending on the specific needs of the material and on the requested level of degreasing. A first washing step B. follows, with running water in order to remove any residue of the degreasing solution. Subsequently, the material undergoes a step C. of pickling with a solution that includes HNO₃ and H₂SO₄ in optimal proportions in order to remove oxides and other surface impurities, preparing the metal for subsequent treatments. This pickling step ensures that the surface is perfectly clean and ready for step D. of satin finishing, which is carried out with a solution based on NaOH and concentrated stabilizer. The temperature and the exposure time during this step are regulated with precision in order to obtain a surface finish that not only improves the aesthetic aspect of the material as well as the container but also increases the corrosion resistance thereof.

After a further step of washing with running water E., the process continues with two alternative steps F. In a first case, the material or the container is subjected to a F. of anodic oxidation in a solution of H₂SO₄ enriched with an additive. This passage is crucial for forming a protective layer on the aluminum that significantly increases the corrosion resistance thereof, rendering it ideal for applications in which the obtained container can be exposed to extreme conditions, such as the direct exposure to flames or high temperatures.

Still in this first option, the process continues with a step H. of fixing the natural oxidation, using demineralized water at high temperatures, followed by a final washing, in step I. with running water in order to remove any residue and ensure that the material is ready for use without the need for further treatments upon forming and molding of the container. In a further variant, after the bath with sulfuric acid, it is possible to add a plant-based colored pigment which with the subsequent step, the fixing, allows personalizing the aesthetics base on specific requests of a user for more specific products.

In a second version, instead, the process provides, in a step F., that the electroplating that follows the satin finishing step is divided into:
- F.1 preparation of the electrolytic bath and immersion of the container in the bath itself. In a first version, the electrolytic bath is composed of nickel sulphate in order to obtain nickel deposits or of zinc chloride in order to obtain zinc deposits.
- F.2 application of direct electric current through the electrolytic bath maintained up to forming a uniform metallic layer on the surface of the container.

A step L. follows for the careful rinsing of the material or of the container, so as to remove possible electrolyte residues that could have remained on the surface. In addition, the process provides for an additional step M. For treatment by means of passivation, following the substep of removal and rinsing of the material or of the container from the electrolytic bath which consists of a final bath in specific solutions, suitably formulated in order to improve the corrosion resistance and the surface properties of the metallic deposit.

Through such sequences of carefully balanced and controlled steps, the container for food use treated according to the described process not only has an exceptional resistance to corrosion but is also able to maintain its functional and aesthetic properties even after prolonged exposure at adverse environmental conditions. Possible versions provide that the electrolytic bath be based on:
- trivalent chromium,
- zinc chloride,
- potassium cyanide gold and cobalt,
- silver.

## Claims

1. Process of forming disposable food containers with the application of an anti-corrosive treatment, **characterized in that** it comprises in sequence:
(A) a step of chemical degreasing of an aluminum foil using a solution of low alkaline surfactant soaps, preferably at a concentration of between 40 and 60 g/l, at a temperature of between 50 and 70°C and for a time of between 3 and 7 minutes;
(B) a first step of washing with running water;
(C) a step of pickling with a solution, preferably composed of HNO₃ at a concentration of between 200 and 300 ml/l and H₂SO₄ at a concentration of between 80 and 120 ml/l;
(D) a step of satin finishing with a solution, preferably composed of NaOH at a concentration of between 30 and 50 g/l and concentrated stabilizer at a concentration of between 20 and 40 ml/l, at a temperature of between 35 and 45°C, for a time of between 2 and 6 minutes, adjusted with NaOH at a concentration of between 15 and 25%;
(E) a second step of washing with running water;
(F) a step of anodic oxidation with a solution, preferably composed of H₂SO₄ at a concentration of between 170 and 210 g/l and an additive, at a concentration of preferably between 8% and 12% with respect to H₂SO₄, at a temperature of preferably between 18 and 22°C;
(G) a third step of washing with running water;
(H) a step of fixing said oxidation with demineralized water, at a temperature between 90 and 100°C and for a predetermined time and preferably between 2 and 4 minutes per micron,
(I) a final step of washing with running water and molding said disposable container.

2. Process according to the preceding claim 1, **wherein** said chemical degreasing step (A) is carried out using a solution comprising at least low alkaline surfactant soaps preferably at a concentration of 50 g/l, preferably applied at a temperature of 60°C for a time preferably of 5 minutes.

3. Process according to any of the preceding claims 1 and 2, **wherein** said pickling step (C) is carried out using a solution comprising at least HNO₃, preferably at a concentration of 250 ml/l, and H₂SO₄, preferably at a concentration of 100 ml/l.

4. Process according to any of the preceding claims, **wherein** the satin finishing step (D) is carried out using a solution comprising at least NaOH, preferably at a concentration of 40 g/l, and stabilizer, preferably at a concentration of 30 ml/l, preferably applied at a temperature of 40°C for a time of between 3 and 5 minutes and adjusted with 20% NaOH for additions.

5. Process according to any of the preceding claims, **wherein** said anodic oxidation step (F) is carried out using a solution comprising at least H₂SO₄, preferably at a concentration of between 180 and 200 g/l, and additive, preferably at 10% with respect to H₂SO₄, preferably applied at a temperature of between 19 and 21°C.

6. Process according to any of the preceding claims, **wherein** said step (F) provides for an addition of plant-based colored pigment suitable for being fixed in the subsequent step (H), allowing the aesthetics of the pigment of said container to be customized.

7. Process according to any of the preceding claims, **wherein** said step (H) of fixing said oxidation is carried out using demineralized water preferably at a temperature of 95°C for a time preferably of 3 minutes per micron of thickness of the anodized layer.

8. Process according to any of the preceding claims, wherein following said satin finishing step (D), an alternative electroplating step (F) is provided, divided into the following substeps:
- (F.1) preparation of the electrolytic bath and immersion of the container preferably in nickel sulphate for nickel deposits;
- (F.2) application of direct electric current through the electrolytic bath until a uniform metallic layer is formed;
- (L) removal from the electrolytic bath and rinsing to remove possible electrolyte residues.

9. Process according to any of the preceding claims, **wherein** said step (F.1) involves a conversion treatment for aluminum based on trivalent chromium.

10. Process according to any of the preceding claims, wherein said step (F.1) involves preparation of the electrolytic bath and immersion of the container in zinc chloride for zinc deposits.

11. Process according to any of the preceding claims, **wherein** said step (F.1) involves preparation of the electrolytic bath and immersion of the container in cobalt and gold potassium cyanide complex for gold and cobalt alloy deposits.

12. Process according to any of the preceding claims, **wherein** said step (F.1) involves preparation of the electrolytic bath and immersion of the container in silver for shiny and semi-shiny silver deposits.

13. Process, according to the preceding claim 8, **wherein** following said removal and rinsing sub-step, a passivation treatment step (M) is provided, consisting of a final bath in solutions suitable for improving the corrosion resistance and the surface properties of the deposit.

14. Process, according to the preceding claims from 1 to 13, **wherein** said treatment occurs directly on said previously molded disposable container.

15. Disposable food container with anti-corrosion treatment, according to the process of the previous claims from 1 to 14, **characterized in that** it is configured for exposure to direct flame and to resist high temperatures up to 660.3°C (about 933.5 K); said container comprising at least one base body (2) and being preferably made of aluminum.

16. Disposable food container with anti-corrosion treatment, according to the preceding claim 14, **wherein** said base body (2) comprises at least one lid (3) configured to be coupled with said main body (2) to hermetically close said container; said lid undergoes the same said anti-corrosion treatment.

17. Disposable food container with anti-corrosion treatment, according to the preceding claims 14 and 15, **wherein** said lid (3) is equipped with closure systems, configured to ensure a safe and hermetic closure to said container when said lid (3) is coupled to said base body (2) including:
- a so-called crimped closure in which an edge of the central body is folded and hooked tightly to said lid 3, creating a resistant seal;
- a closure obtained by a simple fold of said lid 3;
- a closure by heat sealing to said central body;
- a snap-fit closure in which the lid 3 is fixed to said container thanks to a system of interlocking joints, such as grooves or compatible edges.
